# EUROPEAN PATENT APPLICATION

(11) **EP 4 726 744 A1**
(43) Date of publication of application: **15.04.2026**
(21) Application number: 24823359.5
(22) Date of filing: 11.06.2024
(51) Int. Cl.: H01B 13/00, H01B 1/10, H01M 10/052, H01M 10/0562

(54) **METHOD FOR MANUFACTURING LGPS-TYPE SOLID ELECTROLYTE**

(30) Priority: 12.06.2023 JP 2023096472
(71) Applicant: MITSUBISHI GAS CHEMICAL COMPANY, INC., Chiyoda-ku Tokyo 100-8324 (JP); National University Corporation Toyohashi University of Technology, Tempaku-cho, Toyohashi-shi, Aichi 441-8580 (JP)
(72) Inventor: TAMAI, Kazuki, Niigata-shi, Niigata 950-3112 (JP); KONYA, Masashi, Niigata-shi, Niigata 950-3112 (JP); MATSUDA, Atsunori, Toyohashi-shi, Aichi 441-8580 (JP); HIKIMA, Kazuhiro, Toyohashi-shi, Aichi 441-8580 (JP); MATSUDA, Reiko, Toyohashi-shi, Aichi 441-8580 (JP)
(74) Representative: Vossius & Partner Patentanwälte Rechtsanwälte mbB
(86) International application number: PCT/JP2024/021115
(87) International publication number: WO 2024/257743

(57) **Abstract**

According to one embodiment, there is provided a method for producing an LGPS-type solid electrolyte, comprising:
allowing a first solution, in which a first compound comprising, as a counter ion, a monovalent or divalent metal atom M1 ion having an ionic radius larger than that of a Li atom, or an ammonium ion, is dissolved in a solvent, to come into contact with a cation exchange resin comprising a Li ion, so that the M1 ion or the ammonium ion comprised in the first compound is exchanged with the Li ion, thereby obtaining a second solution, in which a Li-containing compound is dissolved in the solvent,
removing the solvent from the second solution to obtain Li-containing crystals,
mixing the Li-containing crystals with Li₃PS₄ crystals to obtain a precursor, and
treating the precursor by heating, wherein
the first compound consists of the M1 ion or the ammonium ion and an anion containing an S element and an Sn element.

## Description

### Technical Field

The present invention particularly relates to a method for producing an LGPS-type solid electrolyte containing an Sn element.

### Background Art

In recent years, the demand for lithium-ion secondary batteries has been increasing in intended uses such as mobile information terminals, mobile electronic devices, electric vehicles, hybrid electric vehicles, and further, stationary power storage systems. However, current lithium-ion secondary batteries use flammable organic solvents as electrolytes, and thus, require a strong exterior to prevent the organic solvents from leaking. In addition, restrictions on the structure of devices have been imposed, such that portable personal computers, etc. are required to have structures that are against the risk of electrolyte leakage.

Moreover, the intended uses of lithium-ion secondary batteries have expanded to moving objects such as automobiles and airplanes, and stationary lithium-ion secondary batteries are required to have large volumes. Under such circumstances, there is a tendency to place more importance on safety than ever before, and efforts are being made to develop all-solid-state lithium-ion secondary batteries that do not use harmful substances such as organic solvents.

As solid electrolytes for all-solid-state lithium-ion secondary batteries, for example, the use of oxides, phosphate compounds, organic polymers, sulfides, etc. is being considered.

Among these solid electrolytes, sulfides have the characteristics of having high ionic conductivity and being relatively soft, thereby making it easy to form an interface between a solid and a solid. Furthermore, such sulfides are stable with respect to active materials, and their development as practical solid electrolytes is progressing.

A useful sulfide-based solid electrolyte may be an LGPS-type solid electrolyte, which has a specific crystal structure (Patent Literature 1). Among sulfide-based solid electrolytes, the LGPS-type solid electrolyte has extremely high ionic conductivity and can operate stably from a low temperature of -30°C to as a high temperature of 100°C, so that the LGPS-type solid electrolyte can be highly expected for practical use. In particular, an LGPS-type solid electrolyte containing an Sn element has attracted particular attention in recent years due to its favorable ionic conductivity, water resistance, and further, low cost (Non Patent Literature 1 and Patent Literature 2).

### Citation List

### Patent Literature

Patent Literature 1: Japanese Patent No. 6996553
Patent Literature 2: Japanese Patent No. 6998588

### Non Patent Literature

Non Patent Literature 1: Journal of Power Sources 396, 2018, pp. 824-830

### Summary of Invention

### Technical Problem

Under the above-described circumstances, it has been desired to efficiently produce an Sn-containing LGPS-type solid electrolyte having excellent properties.

### Solution to Problem

Hence, as a result of intensive research, the present inventors have discovered a method for efficiently producing a solid electrolyte having excellent properties (e.g., ionic conductivity, activation energy, etc.).

The present invention is, for example, as follows.
[1] A method for producing an LGPS-type solid electrolyte, comprising:
   allowing a first solution, in which a first compound comprising, as a counter ion, a monovalent or divalent metal atom M1 ion having an ionic radius larger than that of a Li atom, or an ammonium ion, is dissolved in a solvent, to come into contact with a cation exchange resin comprising a Li ion, so that the M1 ion or the ammonium ion comprised in the first compound is exchanged with the Li ion, thereby obtaining a second solution, in which a Li-containing compound is dissolved in the solvent,
   removing the solvent from the second solution to obtain Li-containing crystals,
   mixing the Li-containing crystals with Li₃PS₄ crystals to obtain a precursor, and
   treating the precursor by heating, wherein
   the first compound consists of the M1 ion or the ammonium ion and an anion containing an S element and an Sn element.
[1-2] The method according to the above [1], wherein the metal atom M1 is selected from the group consisting of a Na atom, a K atom, a Rb atom, a Cs atom, a Ca atom, a Sr atom, and a Ba atom.
[1-3] The method according to the above [1] or [1-2], wherein the anion containing an S element and an Sn element is selected from the group consisting of SnS₄⁴⁻, Sn₂S₇⁶⁻, Sn₂S₆⁴⁻, SnS₃²⁻ and SnP₂S₁₂¹⁰⁻.
[1-4] The method according to any one of the above [1] to [1-3], wherein the first compound is selected from the group consisting of Na₄SnS₄, Na₆Sn₂S₇, Na₄Sn₂S₆, Na₂SnS₃, Na₁₀SnP₂S₁₂, Na_{9.81}Sn_{0.81}P_{2.19}S₁₂, Na₁₀(Ge_{0.5}Sn_{0.5})P₂S₁₂, Na₁₀(Si_{0.5}Sn_{0.5})P₂S₁₂, Na_{3.45}[Sn_{0.09}Si_{0.36}]P_{0.55}S₄, (NH₄)₄SnS₄, (NH₄)₄Sn₂S₆, and (NH₄)₂SnS₃.
[2] The method according to any one of the above [1] to [1-4], wherein the solvent is water or methanol.
[3] The method according to any one of the above [2], wherein the solvent is methanol.
[3-1] The method according to any one of the above [1] to [3], wherein the Li-containing crystals are selected from the group consisting of Li₄SnS₄, Li₆Sn₂S₇, Li₄Sn₂S₆, Li₂SnS₃, Li₁₀SnP₂S₁₂, Li_{3.8}Sn_{0.8}Sb_{0.2}S₄, Li_{3.27}Sn_{0.27}P_{0.73}S₄, Li₁₀(Ge_{0.5}Sn_{0.5})P₂S₁₂, Li₁₀(Si_{0.5}Sn_{0.5})P₂S₁₂, and Li_{3.45}[Sn_{0.09}Si_{0.36}]P_{0.55}S₄.
[4] The method according to any one of the above [1] to [3], wherein the heat treatment is carried out at a temperature of 300°C to 700°C.
[5] The method according to any one of the above [1] to [4], wherein the heat treatment is carried out under an inert gas atmosphere.
[6] The method according to any one of the above [1] to [5], wherein the LGPS-type solid electrolyte has peaks at, at least, 20 = 20.18°±0.50°, 20.44°±0.50°, 26.96°±0.50° and 29.58°±0.50° in X-ray diffraction (CuKα: λ = 1.5405Å).
[7] The method according to any one of the above [1] to [6], wherein the LGPS-type solid electrolyte contains, as a main constituent, a crystal structure having an octahedron O composed of a Li element and an S element, a tetrahedron T₁ composed of one or more elements selected from the group consisting of P and Sn and an S element, and a tetrahedron T₂ composed of a P element and an S element, wherein the tetrahedron T₁ and the octahedron O share a ridge, and the tetrahedron T₂ and the octahedron O share a vertex.
[8] The method according to any one of the above [1] to [7], wherein the Li₃PS₄ crystals are β-Li₃PS₄.
[9] The method according to any one of the above [1] to [8], wherein the Li-containing crystals have the composition of Li₄SnS₄.
[9-1] The method according to any one of the above [1] to [9], wherein the composition of the LGPS-type solid electrolyte is selected from the group consisting of Li_{3.27}Sn_{0.27}P_{0.73}S₄, Li_{3.33}Sn_{0.33}P_{0.67}S₄, Li₁₀SnP₂S₁₂, Li₁₀(Ge_{0.5}Sn_{0.5})P₂S₁₂, Li₁₀(Si_{0.5}Sn_{0.5})P₂S₁₂, and Li_{3.45}[Sn_{0.09}Si_{0.36}]P_{0.55}S₄.
[9-2] The method according to any one of the above [1] to [9-1], wherein, in the step of mixing the Li-containing crystals with Li₃PS₄ crystals, the crystals were mixed at a molar ratio of Li₄SnS₄ : Li₃PS₄ = 1 : x (x = 1 to 3).
[9-3] The method according to any one of the above [1] to [9-2], which further comprises a step of atomizing the Li-containing crystals, after the step of removing the solvent from the second solution.
[9-4] The method according to the above [9-3], wherein the average particle diameter (D50) of the atomized Li-containing crystals is 0.1 to 10 µm.

### Advantageous Effects of Invention

According to the present invention, a method capable of efficiently producing an Sn-containing LGPS-type solid electrolyte having excellent properties can be provided.

### Brief Description of Drawings

[Figure 1] Figure 1 is a schematic view showing the crystal structure of the Sn-containing LGPS-type solid electrolyte according to one embodiment of the present invention.
[Figure 2] Figure 2 is a schematic cross-sectional view of the all-solid-state battery according to one embodiment of the present invention.
[Figure 3] Figure 3 is a view showing the X-ray diffraction measurement results of the solid electrolyte powders obtained in Examples 1 and 2 and Comparative Example 1.
[Figure 4] Figure 4 is a view showing the Raman spectroscopy results of the solid electrolyte powders obtained in Examples 1 and 2 and Comparative Example 1.

### Description of Embodiments

Hereinafter, the embodiments of the present invention will be described. It is to be noted that the materials, configurations, etc. described below are not intended to limit the present invention, and they can be modified in various ways within the scope of the gist of the present invention.

The method for producing an LGPS-type solid electrolyte according to one embodiment of the present invention comprises:
allowing a first solution, in which a first compound comprising, as a counter ion, a monovalent or divalent metal atom M1 ion having an ionic radius larger than that of a Li atom, or an ammonium ion, is dissolved in a solvent, to come into contact with a cation exchange resin comprising a Li ion, so that the M1 ion or the ammonium ion comprised in the first compound is exchanged with the Li ion, thereby obtaining a second solution, in which a Li-containing compound is dissolved in the solvent,
removing the solvent from the second solution to obtain Li-containing crystals,
mixing the Li-containing crystals with Li₃PS₄ crystals to obtain a precursor, and
treating the precursor by heating. Herein, the first compound in the above-described method consists of an M1 ion or an ammonium ion, and an anion containing an S element and an Sn element.

According to the above-described method, an LGPS-type solid electrolyte having preferred properties (ionic conductivity, activation energy, etc.) can be obtained, particularly when used in all-solid-state batteries. Although the reason for this is unclear, it is assumed that allowing the Li-containing crystals obtained by the ion exchange step to further react with Li₃PS₄ crystals would cause the improvement of ionic conductivity. By allowing the Li-containing crystals to react with Li₃PS₄ crystals to generate an LGPS phase that is a highly ionic conductive material, excellent ionic conductivity is exhibited. Moreover, obtaining highly pure Li-containing crystals by the ion exchange method is thought to bring on excellent ionic conductivity.

Sulfides such as SnS₂ and Li₂S, which have conventionally been used as solid electrolyte materials, react with oxygen and moisture in the atmosphere, resulting in material deterioration (by-production of oxides) and generation of toxic hydrogen sulfide. Thus, storage and handling in a low dew point environment have been required. In contrast, according to the method according to the embodiment of the present invention, inexpensive and easy-to-handle raw materials such as Na₂S, SnCl₄ and LiOH can be used, rather than expensive and difficult-to-handle materials such as SnS₂ and Li₂S. Accordingly, the above-described method is also advantageous in that LGPS-type solid electrolytes can be inexpensively and simply produced. Furthermore, since the above-described method can be carried out using a reactor and an ion exchange column, without using a planetary ball mill, which is not suitable for large-scale production, LGPS-type solid electrolytes can be used in large quantities using a large-scale apparatus. Therefore, according to the above-described method, it is possible to more efficiently produce LGPS-type solid electrolytes.

Further, since an Sn-containing sulfide solid electrolyte has been confirmed to have high water resistance and suppresses generation of hydrogen sulfide, the Sn-containing sulfide solid electrolyte is a highly safe material. Thus, in the production of the Sn-containing LGPS-type solid electrolyte according to the embodiment of the present invention, there is no need to prepare a low dew point environment, particularly in the stage leading up to obtaining Li-containing crystals. In this respect as well, it can be said that LGPS-type solid electrolytes can be produced at low cost.

Hereafter, the components of the present invention will be successively described.

### 1. Method for producing Sn-containing LGPS-type solid electrolyte

According to one embodiment of the present invention,
there is provided a method for producing an LGPS-type solid electrolyte, comprising:
allowing a first solution, in which a first compound comprising, as a counter ion, a monovalent or divalent metal atom M1 ion having an ionic radius larger than that of a Li atom, or an ammonium ion, is dissolved in a solvent, to come into contact with a cation exchange resin comprising a Li ion, so that the M1 ion or the ammonium ion comprised in the first compound is exchanged with the Li ion, thereby obtaining a second solution, in which a Li-containing compound is dissolved in the solvent (ion exchange step),
removing the solvent from the second solution to obtain Li-containing crystals (solvent removal step),
mixing the Li-containing crystals with Li₃PS₄ crystals to obtain a precursor (mixing step), and
treating the precursor by heating (heating step), wherein
the first compound consists of the M1 ion or the ammonium ion and an anion containing an S element and an Sn element.

In the present description, the LGPS-type solid electrolyte refers to a solid electrolyte containing a Li element, a P element, and an S element, and the present invention particularly relates to a method for producing an LGPS-type solid electrolyte further containing an Sn element.

### (1) Ion exchange step

In the ion exchange step, there is first prepared a first solution, in which a first compound comprising, as a counter ion, a monovalent or divalent metal atom M1 ion having an ionic radius larger than that of a Li atom, or an ammonium ion, is dissolved in a solvent. Because the M1 atom has an ionic radius later than that of the Li atom, ion exchange is successfully carried out between the M1 ion and the Li ion.

The first solution used in the ion exchange step is a solution in which the first compound that is an M1 atom-containing compound or an ammonium salt is dissolved in a solvent. Examples of the M1 atom may include a Na atom, a K atom, a Rb atom, a Cs atom, a Ca atom, a Sr atom, and a Ba atom. Of these, the Na atom is preferable from the viewpoint of versatility. The first compound is mainly composed of an M1 ion or an ammonium ion and an anion containing an S element and an Sn element, but it may also contain other elements. Examples of such other elements may include a silicon (Si) element, a germanium (Ge) element, a phosphorus (P) element, an antimony (Sb) element, halogen elements (a fluorine (F) element, a chlorine (Cl) element, a bromine (Br) element, and an iodine (I) element), and an oxygen (O) element. It is to be noted that these other elements may be contained alone or in combination of two or more types. Examples of the anion containing an S element and an Sn element may include SnS₄⁴⁻, Sn₂S₇⁶⁻, Sn₂S₆⁴⁻, SnS₃²⁻, and SnP₂S₁₂¹⁰⁻, and the anion containing an S element and an Sn element is preferably SnS₄⁴⁻ or Sn₂S₆⁴⁻, and more preferably SnS₄⁴. Specific examples of the first compound containing such an anion may include Na₄SnS₄, Na₆Sn₂S₇, Na₄Sn₂S₆, Na₂SnS₃, Na₁₀SnP₂S₁₂, Na_{9.81}Sn_{0.81}P_{2.19}S₁₂, Na₁₀(Ge_{0.5}Sn_{0.5})P₂S₁₂, Na₁₀(Si_{0.5}Sn_{0.5})P₂S₁₂, Na_{3.45}[Sn_{0.09}Si_{0.36}]P_{0.55}S₄, (NH₄)₄SnS₄, (NH₄)₄Sn₂S₆, and (NH₄)₂SnS₃. Of these, Na₄SnS₄ and Na₄Sn₂S₆ are preferable, and Na₄SnS₄ is more preferable.

For example, when the first compound is Na₄SnS₄, the Na₄SnS₄ can be produced by the following reaction and can be then used.

### (Synthesis of Na₄SnS₄)

2Na₂S + SnCl₄ → SnS₂ + 4NaCl (Reaction formula 1)

SnS₂ + 2Na₂S → Na₄SnS₄ (Reaction formula 2)

Thus, since Na₄SnS₄ can be produced using inexpensive and easy-to-handle raw materials such as Na₂S and SnCl₄, it is advantageous to use Na₄SnS₄ as a first compound.

The raw materials used to produce the first compound are not limited to the above-described substances, and other examples of the raw materials may include magnesium sulfide (MgS), strontium sulfide (SrS), elementary substance of sulfur, tin sulfide (SnS), and tin (Sn). When the first compound contains elements other than the M1 ion or the ammonium ion, the S element, and the Sn element, raw materials containing such other elements can be used. Specific examples of such raw materials may include: Si element-containing raw materials, such as silicon sulfide (SiS₂), silicon (Si), and silicon dioxide (SiO); Ge element-containing raw materials, such as germanium sulfide (GeS₂), germanium (Ge), and germanium dioxide (GeO₂); Sb element-containing raw materials, such as antimony sulfide (Sb₂S₃), antimony (Sb), and antimony oxide (Sb₂O₃); P element-containing raw materials, such as elementary substance of phosphorus (P), phosphorus trisulfide (P₂S₃), phosphorus pentasulfide (P₂S₅), phosphorus pentachloride (PCl₅), phosphorus tribromide (PBr₃), and phosphorus pentabromide (PBr₅); halogen element-containing raw materials, such as lithium bromide (LiBr), sodium bromide (NaBr), lithium iodide (LiI), sodium iodide (NaI), magnesium iodide (MgI₂), phosphorus pentachloride (PCl₅), phosphorus tribromide (PBr₃), and phosphorus pentabromide (PBr₅); and O element-containing raw materials, such as lithium oxide (Li₂O), lithium oxide (Na₂O), phosphorus pentoxide (P₂O₅), silicon dioxide (SiO₂), germanium dioxide (GeO₂), tin(II) oxide (SnO), tin(IV) oxide (SnO₂), and tin(IV) oxide (SnO₃).

These raw materials may be used alone or in combination of two or more types.

The solvent used in the first solution is not particularly limited, as long as the first compound is dissolved therein, and examples of the solvent may include water, alcohols, thiols, and acetone. The solvent is preferably water or an alcohol, and more preferably an alcohol. Examples of the alcohols may include methanol, ethanol, and propanol. Of these, water, methanol or ethanol is preferably used, and water or methanol is more preferable, and methanol is particularly preferable.

The content of the first compound in the first solution is not particularly limited, and from the viewpoint of ensuring efficient progression of the ion exchange step, it is preferably 1 x 10⁻⁵ to 1 mol/L, more preferably 0.001 to 0.5 mol/L, and further preferably 0.01 to 0.1 mol/L.

Next, the first solution prepared as described above is allowed to come into contact with a cation exchange resin containing Li ions, so that the M1 ions or ammonium ions contained in the first compound are exchanged with the Li ions, thereby obtaining a second solution in which a Li-containing compound is dissolved in the aforementioned solvent.

The cation exchange resin used herein may be either a strong acidic cation exchange resin or a weak acidic cation exchange resin, and a strong acidic cation exchange resin is preferably used because it has little residual amount of H-type or little volume change and it is easy to handle. For example, the strong acidic cation exchange resins is preferably one having - SO₃Li or -[(SO₃)₂Li₂] as an exchange group. In addition, a chelating resin may also be used in some cases. The parent structure of the cation exchange resin is not particularly limited, and a styrene-based or methacrylic-based structure, etc. can be used. The average pore size and specific surface area of the cation exchange resin are not particularly limited, either.

Specific operations of the ion exchange step are not particularly limited, and conventionally known methods can be applied. That is to say, by supplying the first solution to an ion exchange column loaded with a cation exchange resin and passing it through the column, the M1 ions or ammonium ions in the first compound are exchanged with the Li ions, and a second solution containing a Li-containing compound can be obtained as a distillate. The temperature for the ion exchange step is not particularly limited, and it is preferably 10°C to 50°C. Moreover, from the viewpoint of exchange efficiency, the SV value (i.e., space velocity: the volume of the first solution passed through divided by the volume of the cation exchange resin) is preferably 15 or less, and more preferably 10 or less.

As mentioned above, by the ion exchange step, the M1 ions or ammonium ions in the first compound are exchanged with the Li ions on the ion exchange resin. When Na₄SnS₄ is used as such a first compound and a resin having the exchange group -SO₃Li is used as such an ion exchange resin, the ion exchange occurs through the following reaction:

Na₄SnS₄ + 4R-SO₃Li → Li₄SnS₄ + 4R-SO₃Na.

By the above-described ion exchange step, a second solution, in which the Li-containing compound is dissolved in the solvent contained in the first solution, can be obtained.

### (2) Solvent removal step

Following the ion exchange step, a solvent removal step is carried out. Another step may be arbitrarily included between the ion exchange step and the solvent removal step. By the solvent removal step, the solvent is removed from the second solution to obtain Li-containing crystals. Specific operations of the solvent removal step are not particularly limited, and conventionally known methods can be applied. The solvent can be removed, for example, by freeze-drying (a method, in which the second solution is first frozen and then the boiling point of the frozen dried product is lowered in a vacuum to sublimate the water), vacuum drying (a method, in which the boiling point is lowered by reducing the pressure inside a heating device to promote solvent removal from the second solution), spray drying (a method, in which the second solution is sprayed into a gas to rapidly dry it, thereby obtaining a dry powder), etc. Alternatively, the solvent may also be removed by heat drying. In such a case, the heating temperature can be set, as appropriate, depending on the type of the solvent, and the heating temperature is, for example, between 50°C and 300°C, and more preferably between 100°C and 180°C. Moreover, vacuum drying may also be performed in conjunction with heat drying. Whichever method is adopted, it is preferable to set appropriate conditions, depending on the type of the solvent contained in the second solution.

The constituent elements of the Li-containing crystals obtained by the above-described step vary depending on the composition of the first compound as a raw material. Examples of the Li-containing crystals may include crystals consisting of Li element, Sn element and S element, crystals consisting of Li element, Sn element, Si element and S element, crystals consisting of Li element, Sn element, Sb element and S element, crystals consisting of Li element, Sn element, P element and S element, crystals consisting of Li element, Sn element, F element and S element, crystals consisting of Li element, Sn element, Cl element and S element, crystals consisting of Li element, Sn element, Br element and S element, crystals consisting of Li element, Sn element, O element and S element, crystals consisting of Li element, Sn element, Si element, P element and S element, and crystals consisting of Li element, Ge element, Sn element, P element and S element. Of these, preferred examples of the Li-containing crystals may include crystals consisting of Li element, Sn element and S element, crystals consisting of Li element, Sn element, P element and S element, crystals consisting of Li element, Sn element, Si element, P element and S element, crystals consisting of Li element, Ge element, Sn element, P element and S element; and the Li-containing crystals are more preferably crystals consisting of Li element, Sn element and S element.

The composition of the Li-containing crystals is not particularly limited, and examples thereof may include Li₄SnS₄, Li₆Sn₂S₇, Li₄Sn₂S₆, Li₂SnS₃, Li₁₀SnP₂S₁₂, Li_{3.8}Sn_{0.8}Sb_{0.2}S₄, Li_{3.27}Sn_{0.27}P_{0.73}S₄, Li₁₀(Ge_{0.5}Sn_{0.5})P₂S₁₂, Li₁₀(Si_{0.5}Sn_{0.5})P₂S₁₂, and Li_{3.45}[Sn_{0.09}Si_{0.36}]P_{0.55}S₄. Of these, Li₄SnS₄, and Li₄Sn₂S₆ are preferable, and Li₄SnS₄ is more preferable.

The Li-containing crystals mainly comprise the Li-containing compound obtained by subjecting the first solution to the ion exchange step. However, depending on the treating conditions in the ion exchange step, M1 atom-containing components or ammonium salts derived from the first compound contained in the first solution may also be present in the Li-containing crystals. The content of these impurities in the Li-containing crystals is preferably 3% by mass or less, and more preferably 1% by mass or less.

### (3) Atomization step

After the solvent removal step, a step of atomizing the Li-containing crystals may be arbitrarily performed. In all-solid-state batteries, the finer the crystal particles of the solid electrolyte, the lower the interfacial resistance between the solid electrolyte layer and the electrode layer, which is expected to result in the higher energy density, higher output, etc. of the all-solid-state batteries. In addition, small particles facilitate reactions in the subsequent heating step, and generation of by-products can be suppressed.

For example, the average particle diameter (D50) of the atomized Li-containing crystals obtained by the atomization step is preferably 0.1 to 10 µm, and more preferably 0.1 to 1 µm. The atomization method is not particularly limited, and the atomization method may be, for example, a method comprising allowing a good solvent solution obtained by dissolving the Li-containing crystals in a good solvent to come into contact with a poor solvent to atomize the crystals. This method is preferably carried out under an inert gas atmosphere such as argon.

The good solvent is not particularly limited, and examples thereof may include alcohol solvents, carboxylic acid solvents, lactam solvents, and water. Examples of the alcohol solvents may include methanol (boiling point: 64.7°C), ethanol (boiling point: 78.4°C), propanol (boiling point: 97°C), isopropyl alcohol (boiling point: 82.5°C), and 1-butanol (boiling point: 117.7°C). Examples of the carboxylic acid solvents may include formic acid (boiling point: 100.8°C) and acetic acid (boiling point: 118°C). The lactam solvents may be, for example, N-methylpyrrolidone (NMP) (boiling point: 202°C). Of these, the good solvent is preferably an alcohol solvent, and is particularly preferably methanol. These good solvents may be used alone or in combination of two or more types.

The content of the Li-containing crystals in the good solvent solution is preferably 1% to 30% by mass, more preferably 5% to 30% by mass, and further preferably 15% to 30% by mass, with respect to the total mass of the good solvent. When the content of the Li-containing crystal is 1% by mass or more, it is preferable from the viewpoints of reducing the amount of the solvent used and obtaining finer crystals. On the other hand, when the content of the Li-containing crystal content of 30% by mass or less, it is preferable because it reduces the amount of undissolved crystals.

The poor solvent is not particularly limited, and examples thereof may include aliphatic hydrocarbon solvents, aromatic hydrocarbon solvents, ketone solvents, ether solvents, ester solvents, nitrile solvents, halogen solvents, amide solvents, and sulfoxide solvents. Examples of the aliphatic hydrocarbon solvents may include hexane (boiling point: 69°C), heptane (boiling point: 98.4°C), and octane (boiling point: 125.6°C). Examples of the aromatic hydrocarbon solvents may include benzene (boiling point: 80.1°C), toluene (boiling point: 110.6°C), and xylene (boiling point: 139°C). Examples of the ketone solvents may include acetone (boiling point: 56°C) and methyl ethyl ketone (MEK) (boiling point: 79.6°C). Examples of the ether solvents may include diethyl ether (boiling point: 34.6°C), tetrahydrofuran (THF) (boiling point: 66°C), and 1,4-dioxane (boiling point: 101°C). Examples of the ester solvents may include methyl acetate (boiling point: 57.1°C), ethyl acetate (boiling point: 77.1°C), propyl acetate (boiling point: 102°C), methyl propionate (boiling point: 79.8°C), and ethyl propionate (boiling point: 99°C). Examples of the nitrile solvents may include acetonitrile (boiling point: 82°C), isobutyronitrile (boiling point: 108°C), and benzonitrile (boiling point: 191°C). Examples of the halogen solvents may include methylene chloride (boiling point: 39.6°C) and chloroform (boiling point: 61.2°C). An example of the amide solvents may be N,N-dimethylformamide (DMF) (boiling point: 153°C). An example of the sulfoxide solvents may be dimethyl sulfoxide (DMSO) (boiling point: 189°C).

Among the aforementioned solvents, the poor solvent preferably comprises at least one of nitrile solvents and ester solvents. The poor solvent is preferably a nitrile solvent, and is more preferably acetonitrile. It is to be noted that the poor solvent may be used alone or in combination of two or more types.

The boiling point of the poor solvent is preferably higher than the boiling point of the good solvent. As mentioned later, if the boiling point of the poor solvent is higher than the boiling point of the good solvent, the temperature of the poor solvent during contact can be set to be higher than the boiling point of the good solvent. Thereby, when the good solvent solution is allowed to come into contact with the poor solvent, a part or all of the good solvent immediately volatilizes, so that the contact opportunity between the crystals and the poor solvent can be further increased, and so that the crystal precipitation rate can be further increased. Thereby, further atomized crystals having a further decreased average particle diameter can be obtained.

Atomized Li-containing crystals are precipitated by allowing the good solvent solution to come into contact with the poor solvent. The contact method is not particularly limited, and examples of the contact method may include a method of adding the poor solvent into the good solvent solution and a method of adding the good solvent solution into the poor solvent. The addition method is not particularly limited, and it may be dropwise addition or addition all at once.

Finally, a drying step is performed to remove the remaining poor solvent and good solvent, thereby obtaining atomized Li-containing crystals. The drying temperature is not particularly limited, as long as it is a temperature at which the remaining solvent can be removed. The drying temperature is preferably 100°C or higher, more preferably 120°C to 300°C, and further preferably 150°C to 250°C. The pressure during the drying is not particularly limited, and it is preferably 500 hPa or less, more preferably 0.1 to 200 hPa, and further preferably 1 to 50 hPa.

When the atomization step is performed following the solvent removal step, if the solvent in the second solution is the same as that used in the atomization step, the second solution can be directly subjected to the atomization step without removing the solvent. In other words, the aforementioned solvent removal step can be omitted. For example, if the solvent in the second solution is methanol and the Li-containing crystals are dissolved in methanol as a good solvent in the subsequent atomization step, it is not necessary to carry out the solvent removal step. Using the same solvent in both steps is preferable from the viewpoint of simplifying the production method.

### (4) Mixing step

Subsequently, the Li-containing crystals obtained as described above are mixed with Li₃PS₄ crystals to obtain a precursor. The molar ratio between the Li-containing crystals and the Li₃PS₄ crystals to be mixed may be adjusted to be an element ratio at which an LGPS-type solid electrolyte of interest can be obtained. For example, if it is set to be Li₄SnS₄ : Li₃PS₄ = 1 : x (molar ratio), x is preferably 1 to 3, and more preferably x = 2 to 2.8. When Li₄SnS₄ : Li₃PS₄ = about 1 : 2, an LGPS-type solid electrolyte of Li₁₀SnP₂S₁₂ can be obtained, and when Li₄SnS₄ : Li₃PS₄ = about 1 : 2.7, Li_{3.27}Sn_{0.27}P_{0.73}S₄ having the highest ionic conductivity can be obtained.

All of α, β and γ can be used as Li₃PS₄ crystals, and the Li₃PS₄ crystals are more preferably β-Li₃PS₄. This is because β-Li₃PS₄ is relatively stably present in the LGPS synthesis system. Commercially available products may be used as Li₃PS₄ crystals, but as described in the Examples later, the Li₃PS₄ crystals can also be synthesized from Li₂S and P₂S₅ under an inert gas atmosphere such as argon.

The method of mixing Li-containing crystals with Li₃PS₄ crystals is not limited, and the Li-containing crystals and the Li₃PS₄ crystals can be mixed with each other in a solid phase or in the presence of a solvent. It is to be noted that the mixing method using a solvent is suitable for large-scale synthesis because it enables uniform mixing. In the case of using a solvent, it is preferable to use a solvent that does not react with the raw materials or the resulting precursor. Examples of such a solvent may include ether solvents, ester solvents, hydrocarbon solvents, and nitrile solvents. Specific examples may include tetrahydrofuran, cyclopentyl methyl ether, diisopropyl ether, diethyl ether, dimethyl ether, dioxane, methyl acetate, ethyl acetate, butyl acetate, and acetonitrile. In order to prevent deterioration of the raw material composition, it is preferable to remove oxygen and moisture from the solvent in advance. In particular, the moisture content is preferably 100 ppm or less, and more preferably 50 ppm or less. Mixing is preferably carried out under an inert gas atmosphere. Examples of the inert gas that can be used herein may include nitrogen, helium, and argon. Deterioration of the raw material composition can be suppressed also by removing oxygen and moisture from the inert gas. The oxygen and moisture concentrations in the inert gas are both preferably 1000 ppm or less, more preferably 100 ppm or less, and particularly preferably 10 ppm or less.

During mixing, the substrate may be in a slurry state in which it is uniformly dispersed, but more preferably, some of the raw materials (regardless of type) are dissolved. In the case of a slurry, it is preferable to crush the aggregated particles by stirring, for the purpose of disintegrating the particles. Furthermore, a bead mill, a homogenizer, or an ultrasonic disperser may also be used.

In the case of carrying out the mixing in a solid state, a mortar mixing, or the use of a mortar and pestle mixer, a ball mill or the like, can be applied. In these methods, the crystals are not usually amorphized. The mixing is preferably performed in a vacuum or under an inert gas atmosphere, and the conditions thereof are similar to those in the case of using a solvent.

With regard to the temperature during the mixing temperature, heating does not need, but if a solvent is used, heating can also be used to increase the solubility and dissolution rate of the substrate. If heating is carried out, it is sufficient to perform the mixing at a temperature of the boiling point of the solvent or lower. However, it is also possible to perform the mixing under increased pressure using an autoclave, etc. It is to be noted that the mixing at high temperatures can cause the reaction to proceed before the raw materials are thoroughly mixed, which increases the likelihood of by-product generation. Accordingly, the mixing step is preferably carried out around room temperature.

The mixing time is sufficient, if the time in which the mixture becomes homogeneous is ensured. Such time often depends on the scale of production, but the mixture can be homogeneous by mixing for, for example, 0.1 to 24 hours.

When a solvent is used, the precursor is obtained by removing the solvent. Such solvent removal is carried out by heat drying or vacuum drying, and the optimal temperature therefor varies depending on the type of the solvent. The solvent removal time can be shortened by applying a temperature sufficiently higher than the boiling point. The temperature for the solvent removal is preferably in the range of 60°C to 280°C, and more preferably 100°C to 250°C. It is to be noted that the temperature during the solvent removal can be lowered, and the required time can be shortened, by removing the solvent under reduced pressure, such as by vacuum drying. Moreover, the time required for solvent removal can also be shortened by flowing an inert gas with a sufficiently low moisture content, such as nitrogen or argon. Besides, the subsequent heating step and the solvent removal can also be carried out simultaneously.

### (5) Heating Step

The precursor obtained in the above-described mixing step is subjected to a heat treatment to obtain an LGPS-type solid electrolyte with a small particle diameter. The heating temperature is in the range of 300°C to 700°C, preferably in the range of 350°C to 650°C, and particularly preferably in the range of 450°C to 600°C. By heating at the temperature within the above-described range, crystals of interest can be obtained with high purity.

The heating time slightly varies in relation to the heating temperature, but crystallization is sufficiently achieved generally in the range of 0.1 and 24 hours. A shorter heating time is preferable because it minimizes deterioration of the LGPS-type solid electrolyte.

The heating can be carried out in a vacuum or under an inert gas atmosphere, and the heating is preferably carried out under an inert gas atmosphere. Examples of the inert gas that can be used herein may include nitrogen, helium and argon, and among others, argon is preferable. Low concentrations of oxygen and moisture are preferable, and the conditions thereof are the same as those for the mixing step for the synthesis of a precursor.

### 2. Sn-containing LGPS-type solid electrolyte

The LGPS-type solid electrolyte obtained by the above-mentioned method has peaks at, at least, 2θ = 20.18°±0.50°, 20.44°±0.50°, 26.96°±0.50° and 29.58°±0.50° in X-ray diffraction (CuKα: λ = 1.5405Å).The LGPS-type solid electrolyte preferably has peaks at, at least, 20 = 20.18°±0.40°, 20.44°±0.40°, 26.96°±0.40° and 29.58°±0.40°in X-ray diffraction (CuKα: λ = 1.5405Å). The LGPS-type solid electrolyte more preferably has peaks at, at least, 2θ = 20.18°±0.30°, 20.44°±0.30°, 26.96°±0.30° and 29.58°±0.30° in X-ray diffraction (CuKα: λ = 1.5405Å).

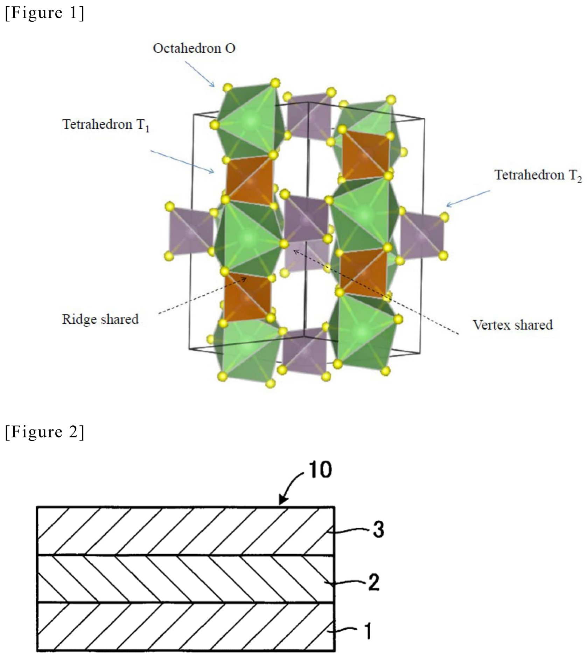

Preferably, as shown in Figure 1, the LGPS-type solid electrolyte obtained by the method according to the embodiment contains, as a main constituent, a crystal structure having an octahedron O composed of a Li element and an S element, a tetrahedron T₁ composed of one or more elements selected from the group consisting of P and Sn and an S element, and a tetrahedron T₂ composed of a P element and an S element, wherein the tetrahedron T₁ and the octahedron O share a ridge, and the tetrahedron T₂ and the octahedron O share a vertex. It is assumed that higher ionic conductivity can be obtained by allowing the crystals to have such a structure.

The LGPS-type solid electrolyte obtained by the method according to the embodiment can be preferably used, for example, as a solid electrolyte material for lithium-ion secondary batteries. The present LGPS-type solid electrolyte preferably has a lithium ion conductivity (25°C) of preferably 1.0 x 10⁻³ S/cm or more (for example,1.0 x 10⁻³ to 5.0 x 10⁻³ S/cm, or 1.0 x 10⁻³ to 3.0 x 10⁻³ S/cm), more preferably 1.5 x 10⁻³ S/cm or more (for example,1.5 x 10⁻³ to 5.0 x 10⁻³ S/cm, 1.5 x 10⁻³ to 3.0 x 10⁻³ S/cm, or 1.6 x 10⁻³ to 3.0 x 10⁻³ S/cm), further preferably 2.0 x 10⁻³ S/cm or more (for example,2.0 x 10⁻³ to 5.0 x 10⁻³ S/cm, 2.0 x 10⁻³ to 3.0 x 10⁻³ S/cm, or 2.5 x 10⁻³ to 3.0 x 10⁻³ S/cm). In addition, the activation energy of the LGPS-type solid electrolyte is preferably 35.0 kJ/mol or less, and more preferably 30.0 kJ/mol or less. Herein, the activation energy is the energy required for lithium ion diffusion, which is calculated using the Arrhenius equation from the lithium ion conductivity at each measurement temperature, and serves as an index of the ease of lithium ion diffusion.

The composition of the LGPS-type solid electrolyte obtained by the method according to the embodiment is not particularly limited. Examples thereof may include Li_{3.27}Sn_{0.27}P_{0.73}S₄, Li_{3.33}Sn_{0.33}P_{0.67}S₄, , Li₁₀SnP₂S₁₂, Li₁₀(Ge_{0.5}Sn_{0.5})P₂S₁₂, Li₁₀(Si_{0.5}Sn_{0.5})P₂S₁₂, and Li_{3.45}[Sn_{0.09}Si_{0.36}]P_{0.55}S₄. Preferred examples of the composition of the present LGPS-type solid electrolyte may include Li₁₀SnP₂S₁₂, Li_{3.27}Sn_{0.27}P_{0.73}S₄, and Li_{3.33}Sn_{0.33}P_{0.67}S₄, with Li_{3.27}Sn_{0.27}P_{0.73}S₄ and Li₁₀SnP₂S₁₂ being particularly preferable.

The LGPS-type solid electrolyte obtained by the method according to the embodiment can be formed into a desired molded body by various types of means, and can be used for various types of intended uses, including the all-solid-state battery described below as a typical example. The molding method is not particularly limited. For example, there can be used a method similar to the molding method for each layer constituting the all-solid-state battery described in the below-mentioned all-solid-state battery.

### 3. All-solid-state battery

The LGPS-type solid electrolyte obtained by the method according to the embodiment can be used, for example, in lithium-ion secondary batteries, particularly in all-solid-state lithium-ion secondary batteries. Here, the "all-solid-state battery" refers to an all-solid-state lithium-ion secondary battery. Figure 2 is a schematic cross-sectional view of the all-solid-state battery according to one embodiment of the present invention. An all-solid-state battery 10 has a structure in which a solid electrolyte layer 2 is disposed between a positive electrode layer 1 and a negative electrode layer 3. The all-solid-state battery 10 can be used in various devices, including mobile phones, personal computers, and automobiles as typical examples.

The LGPS-type solid electrolyte obtained by the method according to the embodiment may be comprised, as a solid electrolyte, in any one or more of the positive electrode layer 1, negative electrode layer 3, and the solid electrolyte layer 2. When the LGPS-type solid electrolyte according to the embodiment is comprised in the positive electrode layer 1 or the negative electrode layer 3, the present LGPS-type solid electrolyte is used in combination with a known positive electrode active material or negative electrode active material for lithium-ion secondary batteries. The amount ratio between the LGPS-type solid electrolyte and other materials comprised in the positive electrode layer 1 or the negative electrode layer 3 is not particularly limited.

When the LGPS-type solid electrolyte obtained by the method according to the embodiment is comprised in the solid electrolyte layer 2, the solid electrolyte layer 2 may be composed only of the LGPS-type solid electrolyte according to the embodiment, or may also be used appropriately in combination with an oxide solid electrolyte (e.g., Li₇La₃Zr₂O₁₂), a sulfide-based solid electrolyte (e.g., Li₂S-P₂S₅), other complex hydride solid electrolytes (e.g., LiBH₄ and 3LiBH₄-LiI), etc., as necessary.

An all-solid-state battery is produced by molding and laminating each of the layers described above. The method of molding each layer and the lamination method thereof are not particularly limited.

Examples of the molding and lamination methods may include: a method comprising dispersing a solid electrolyte and/or an electrode active material in a solvent to form a slurry, then applying the slurry using a doctor blade, a spin coater, etc., and then rolling the applied slurry to form a film; a gas-phase method of performing film formation and lamination, using a vacuum deposition method, an ion plating method, a sputtering method, a laser ablation method, etc.; and a pressure molding method of molding powders by hot pressing, or cold pressing that does not require heating, and then laminating the resulting powders.

Since the LGPS-type solid electrolyte obtained by the method according to the embodiment is relatively soft, it is particularly preferable to produce an all-solid-state battery by molding individual layers according to a pressure molding method, and then laminating them. The pressure molding method includes hot pressing that requires heating and cold pressing that does not require heating. The molding can be sufficiently carried out even by cold pressing.

### Examples

Hereinafter, the present invention will be described in more detail in the following examples. However, these examples are not intended to limit the content of the present invention.

### (Example 1)

### (1) Synthesis of Li₄SnS₄

9 mmol SnCl₄·5H₂O (manufactured by Sigma-Aldrich Co. LLC) and 18 mmol Na₂S·9H₂O (manufactured by FUJIFILM Wako Pure Chemical Corporation) were each dissolved in 10 mL of ion exchange water. An SnCl₄·5H₂O aqueous solution was gradually added dropwise to the above-described Na₂S·9H₂O aqueous solution to generate SnS₂. After completion of the dropwise addition, the slurry was immediately centrifuged, and the supernatant was then removed. Washing with ion exchange water was repeated three times to remove the by-product NaCl, thereby obtaining an SnS₂ paste.

To the obtained 9 mmol SnS₂ paste, 18 mmol Na₂S·9H₂O and 10 mL of ion exchange water were added, and the obtained mixture was then stirred at room temperature to obtain a homogeneous aqueous solution containing 9 mmol Na₄SnS₄. A small amount of precipitate was removed using a membrane filter (PTFE; pore size: 1.0 µm). Subsequently, ion exchange water was added to this Na₄SnS₄ aqueous solution to make a 200 mL volume. The present aqueous solution was passed through an ion exchange column filled with a cation exchange resin (manufactured by Organo Corporation; a strong acid cation exchange resin) that had previously been exchanged for Li ions using a LiOH aqueous solution, and a Li₄SnS₄ aqueous solution was obtained from the distillation section. Water was removed from the thus obtained Li₄SnS₄ aqueous solution using an evaporator at 40°C, and the residue was then dried at 240°C for 1 hour using a glass tube oven to obtain Li₄SnS₄ powder, which is referred to as bulk Li₄SnS₄.

### (2) Atomization of Li₄SnS₄

In a glove box under an argon atmosphere, 5 mL of methanol used as a good solvent (ultra-dehydrated grade; manufactured by FUJIFILM Wako Pure Chemical Corporation) was added to the bulk Li₄SnS₄ (400 mg) obtained by the above-described operations, and they were then mixed with each other at room temperature (25°C) for 24 hours. The powder gradually dissolved. The insoluble matter contained in the resulting solution was filtered using a membrane filter to obtain a methanol solution in which Li₄SnS₄ was uniformly dissolved. Thereafter, 100 mL of acetonitrile used as a poor solvent (ultra-dehydrated grade; manufactured by FUJIFILM Wako Pure Chemical Corporation) was added to the present solution, and the solvent was then removed at 40°C, while reducing the pressure using an evaporator. Thereafter, the reaction mixture was vacuum-dried at 180°C for 4 hours to obtain atomized Li₄SnS₄ powder. This powder is referred to as atomized Li₄SnS₄.

### (3) Synthesis of β-Li₃PS₄

In a glove box under an argon atmosphere, Li₂S (manufactured by Sigma-Aldrich Co. LLC; purity: 99.8%) and P₂S₅ (manufactured by Sigma-Aldrich Co. LLC; purity 99%) were weighed out to a molar ratio of Li₂S : P₂S₅ = 1.5 : 1. Next, Li₂S and P₂S₅ were added, in this order, to tetrahydrofuran (ultra-dehydrated grade; manufactured by FUJIFILM Wako Pure Chemical Corporation) to achieve a (Li₂S + P₂S₅) concentration of 10 wt %, and the obtained mixture was blended at room temperature for 12 hours. The mixture was gradually dissolved, thereby obtaining a nearly homogeneous solution containing a small amount of insoluble material.

Li₂S was further added to the obtained solution, so that the total raw material composition, including the above-described raw materials, had a molar ratio of Li₂S : P₂S₅ = 3 : 1. The mixture was then blended at room temperature for 12 hours to obtain a suspension. The solvent was removed from the obtained suspension at 50°C under reduced pressure. Thereafter, vacuum-drying was carried out at 180°C for 4 hours to obtain β-Li₃PS₄. The obtained β-Li₃PS₄ was added to acetonitrile (Wako Pure Chemical Industries, Ltd.; ultra-dehydrated grade) to a concentration of 6 wt %, and the mixture was then blended at room temperature to obtain a slurry. The obtained slurry was subjected to 50°C under reduced pressure to remove the acetonitrile, and the resulting powder was then dried under vacuum at 180°C for 4 hours to remove the solvent, thereby obtaining atomized β-Li₃PS₄ powder. The series of operations were carried out in a glove box under an argon atmosphere.

### (4) Synthesis of LGPS-type solid electrolyte

In a glove box under an argon atmosphere, the above-obtained atomized β-Li₃PS₄ and atomized Li₄SnS₄ were weighed out to a molar ratio of β-Li₃PS₄ : Li₄SnS₄ = 2.7 : 1, and they were then mixed with each other in an agate mortar. The obtained mixture was calcined (550°C, 2 hours) under an argon atmosphere to obtain Li_{3.27}Sn_{0.27}P_{0.73}S₄ crystals (LGPS-type solid electrolyte).

### (Example 2)

### (1) Synthesis of Li₄SnS₄

An SnS₂ paste was obtained by the same method as that of Example 1, with the exception that the resultant was washed with ion exchange water and was then washed with methanol three times.

To the obtained 9 mmol SnS₂ paste, 18 mmol anhydrous Na₂S and 20 mL of ultra-dehydrated methanol were added, followed by stirring at room temperature to obtain a homogeneous methanol solution containing 9 mmol Na₄SnS₄. A small amount of precipitate derived from hydrate was removed using a membrane filter. Subsequently, approximately 50 mL of the Na₄SnS₄ methanol solution was passed through an ion exchange column filled with a cation exchange resin (the same as that in Example 1) that had previously been exchanged for Li ions using a LiOH aqueous solution and had been then substituted with methanol, and a Li₄SnS₄ methanol solution was obtained from the distillation section. The concentration of the obtained Li₄SnS₄ methanol solution was approximately 1.7 wt %.

### (2) Atomization of Li₄SnS₄

In a glove box under an argon atmosphere, 100 mL of acetonitrile used as a poor solvent (ultra-dehydrated grade; manufactured by FUJIFILM Wako Pure Chemical Corporation) was added to 5 mL of the Li₄SnS₄ methanol solution obtained by the above-described operations. Thereafter, the solvent was removed at 40°C, while reducing pressure using an evaporator. Furthermore, the resulting solution was vacuum-dried at 180°C for 4 hours to obtain atomized Li4SnS4 powder.

### (3) Synthesis of LGPS-type solid electrolyte

Using the atomized Li4SnS4 powder obtained above and the β-Li₃PS₄ synthesized in Example 1, Li_{3.27}Sn_{0.27}P_{0.73}S₄ crystals (LGPS-type solid electrolyte) were obtained in the same manner as that of Example 1.

### (Comparative Example 1)

### (1) Synthesis of Li₄SnS₄

Li₂S (manufactured by Sigma-Aldrich Co. LLC; purity: 99.8%) and SnS₂ (manufactured by JAPAN PURE CHEMICAL CO., LTD.; 99.9%) were used as raw materials. These raw materials were weighed out to a stoichiometric ratio of Li₄SnS₄ in a glove box under an argon atmosphere, and they were then blended using an agate mortar for 15 minutes. The obtained powder (1.0 g) and fifteen φ10 mm zirconia balls were placed in a 45-mL zirconia pot, which was then hermetically sealed. This zirconia pot was fixed to a planetary ball mill device (manufactured by Fritsch Japan Co., Ltd.) and a mechanical milling treatment was then carried out at 500 rpm for 10 hours. The precursor powder obtained by the mechanical milling treatment was calcined at 450°C for 8 hours to obtain Li₄SnS₄.

### (2) Atomization of Li₄SnS₄

In a glove box under an argon atmosphere, 1 g of the Li₄SnS₄ obtained by the above-described operations was weighed out. Next, the weighed Li₄SnS₄ was added to 10 mL of methanol (manufactured by Wako Pure Chemical Industries, Ltd.; ultra-dehydrated grade), and the obtained mixture was then blended at room temperature for 6 hours. The mixture was gradually dissolved, thereby obtaining a slurry containing an insoluble material. The obtained slurry was filtrated using a membrane filter to obtain a homogeneous Li₄SnS₄ solution.

The Li₄SnS₄ solution obtained as described above was mixed with 200 mL of acetonitrile (manufactured by Wako Pure Chemical Industries, Ltd.; ultra-dehydrated grade) to obtain a methanol-acetonitrile homogeneous solution.

Methanol was removed from the obtained homogeneous solution at 50°C under reduced pressure, so that Li₄SnS₄ was precipitated in acetonitrile. Thereafter, while keeping the condition of 50°C under reduced pressure, acetonitrile was removed to obtain powder. The solvent was removed while stirring the homogeneous solution.

The powder obtained as described above was dried under vacuum at 180°C for 4 hours to obtain atomized Li₄SnS₄ powder.

### (3) Synthesis of LGPS-type solid electrolyte

Using the atomized Li₄SnS₄ powder obtained as described above and the β-Li₃PS₄ synthesized in Example 1, Li_{3.27}Sn_{0.27}P_{0.73}S₄ crystals (LGPS-type solid electrolyte) were obtained in the same manner as that of Example 1.

### < Measurement of lithium ion conductivity >

The LGPS-type solid electrolytes obtained in Examples 1 and 2 were each subjected to uniaxial molding (380 MPa) to obtain a disk having a thickness of about 1 mm and a diameter of 10 mm. Using an all-solid-state battery evaluation cell (manufactured by Hohsen Corp.), AC impedance measurement (manufactured by Solartron; "SI1260 IMPEDANCE/GAIN-PHASE ANALYZER") was carried out using a four-terminal method at room temperature (25°C), and lithium ion conductivity was calculated.

Specifically, the samples were each placed in a thermostatic chamber set at 25°C and were then retained for 30 minutes, and thereafter, lithium ion conductivity was measured. The measurement frequency range was set to be 0.1 Hz to 1 MHz, and the amplitude was set to be 50 mV.

### < Measurement of activation energy >

As mentioned above, after the ionic conductivity had been measured at 25°C, the temperature of the thermostatic chamber was raised in 10°C increments from 30°C to 90°C, and the ionic conductivity was measured after retaining at each temperature for 25 minutes. The natural logarithm of the obtained ionic conductivity was plotted against the reciprocal of absolute temperature, and the activation energy of lithium ion conduction was obtained using the Arrhenius equation from the slope.

The results of the ionic conductivity and activation energy are shown in Table 1.

**[Table 1]**

| | Ionic conductivity@25°C (mS/cm) | Activation energy (kJ/mol) |
|---|---|---|
| Example 1 | 1.6 | 27.4 |
| Example 2 | 2.5 | 27.2 |

### <X-ray diffraction measurement>

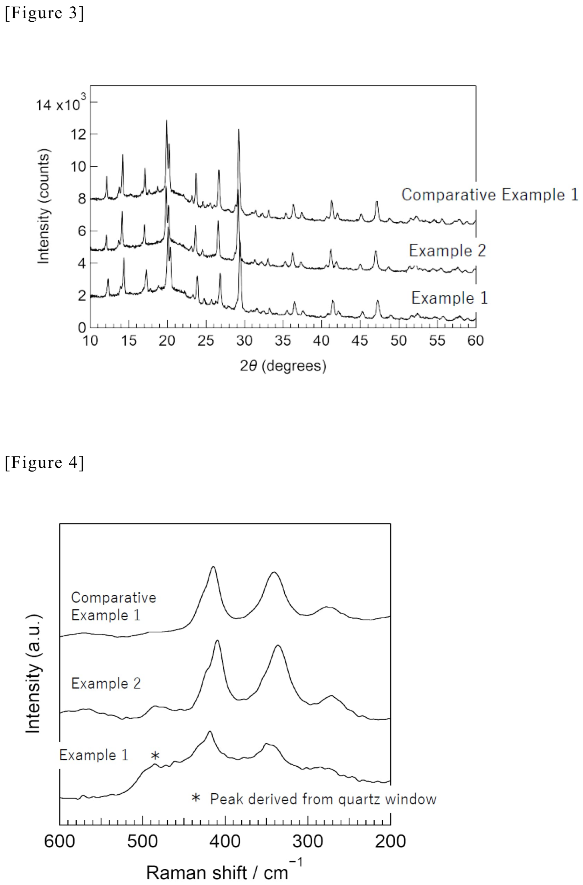

X-ray diffraction measurement ("X'Pert3 Powder" manufactured by PANalytical; CuKα: λ = 1.5405 Å) was carried out on the solid electrolyte powders obtained in Examples 1 and 2 and Comparative Example 1 under an Ar atmosphere at room temperature (25°C). The results are shown in Figure 3.

### < Raman spectroscopy >

Samples for Raman spectroscopy were prepared using the solid electrolyte powders obtained in Examples 1 and 2 and Comparative Example 1 and a sealed container having a quartz glass (φ60 mm; thickness: 1 mm) as an optical window at the top. In a glove box under an argon atmosphere, the solid electrolyte powder was adhered to the quartz glass, and thereafter, the container was hermetically sealed and was removed from the glove box, followed by performing Raman spectroscopy.

A laser Raman Spectrophotometer NRS-5100 (manufactured by JASCO Corporation) was used, and Raman spectroscopy was carried out with an excitation wavelength of 532.15 nm and an exposure time for 60 seconds (Example 1), for 30 seconds (Example 2), and for 50 seconds (Comparative Example 1).

The results of the Raman spectroscopy are shown in Figure 4.

In both X-ray diffraction and Raman spectroscopy, the crystals of Examples 1 and 2 exhibited peaks at positions similar to those of the crystals of Comparative Example 1, in which the Li₄SnS₄ produced by the mechanical milling treatment was used.

According to the methods of the Examples, LGPS-type solid electrolytes having properties (ionic conductivity, activation energy, etc.) that were preferable particularly when used in all-solid-state batteries could be obtained. Moreover, since the above-described excellent LGPS-type solid electrolytes can be obtained without using planetary ball mills, it is possible to produce the excellent LGPS-type solid electrolytes in large amounts, using a large-scale apparatus.

Several embodiments of the present invention have been described. These embodiments are presented as examples and are not intended to limit the scope of the invention. These novel embodiments can be carried out in various other forms, and various omissions, replacements and modifications can be made in a range that does not depart from the gist of the invention. These embodiments and variations thereof are included in the scope and gist of the invention, and are also included in the scope of the inventions recited in the claims and the equivalents thereof.

### Reference Signs List

1...Positive electrode layer, 2... Solid electrolyte layer, 3...Negative electrode layer, 10... All-solid-state battery.

## Claims

1. A method for producing an LGPS-type solid electrolyte, comprising:
allowing a first solution, in which a first compound comprising, as a counter ion, a monovalent or divalent metal atom M1 ion having an ionic radius larger than that of a Li atom, or an ammonium ion, is dissolved in a solvent, to come into contact with a cation exchange resin comprising a Li ion, so that the M1 ion or the ammonium ion comprised in the first compound is exchanged with the Li ion, thereby obtaining a second solution, in which a Li-containing compound is dissolved in the solvent,
removing the solvent from the second solution to obtain Li-containing crystals,
mixing the Li-containing crystals with Li₃PS₄ crystals to obtain a precursor, and
treating the precursor by heating, wherein
the first compound consists of the M1 ion or the ammonium ion and an anion containing an S element and an Sn element.

2. The method according to claim 1, wherein the solvent is water or methanol.

3. The method according to claim 2, wherein the solvent is methanol.

4. The method according to any one of claims 1 to 3, wherein the heat treatment is carried out at a temperature of 300°C to 700°C.

5. The method according to any one of claims 1 to 4, wherein the heat treatment is carried out under an inert gas atmosphere.

6. The method according to any one of claims 1 to 5, wherein the LGPS-type solid electrolyte has peaks at, at least, 20 = 20.18°±0.50°, 20.44°±0.50°, 26.96°±0.50° and 29.58°±0.50° in X-ray diffraction (CuKα: λ = 1.5405Å).

7. The method according to any one of claims 1 to 6, wherein the LGPS-type solid electrolyte contains, as a main constituent, a crystal structure having an octahedron O composed of a Li element and an S element, a tetrahedron T₁ composed of one or more elements selected from the group consisting of P and Sn and an S element, and a tetrahedron T₂ composed of a P element and an S element, wherein the tetrahedron T₁ and the octahedron O share a ridge, and the tetrahedron T₂ and the octahedron O share a vertex.

8. The method according to any one of claims 1 to 7, wherein the Li₃PS₄ crystals are β-Li₃PS₄.

9. The method according to any one of claims 1 to 8, wherein the Li-containing crystals have the composition of Li₄SnS₄.
